# FASCICULE DE BREVET EUROPEEN

(11) **EP 2 962 087 B1**
(45) Date de publication et mention de la délivrance du brevet: **15.03.2017**
(21) Numéro de dépôt: 14707709.3
(22) Date de dépôt: 24.02.2014
(51) Int. Cl.: G01N 21/71, G01N 1/22, G01N 1/04

(54) **SYSTÈME ET PROCÉDÉ POUR L'ANALYSE, PAR SPECTROMÉTRIE DE PLASMA INDUIT PAR LASER, DE LA COMPOSITION D'UNE COUCHE SUPERFICIELLE ET POUR LE PRÉLÈVEMENT D'ÉCHANTILLONS EN VUE D'ANALYSES COMPLÉMENTAIRES**
SYSTEM UND VERFAHREN ZUR DURCH LASERINDUZIERTE PLASMA-SPEKTROSKOPIE ERFOLGENDEN ANALYSE DER ZUSAMMENSETZUNG EINER OBERFLÄCHENSCHICHT UND ZUR PROBEENTNAHME ZWECKS DURCHFÜHRUNG KOMPLEMENTÄRER ANALYSEN
SYSTEM AND METHOD FOR ANALYSING, BY LASER INDUCED PLASMA SPECTROSCOPY, THE COMPOSITION OF A SURFACE LAYER AND FOR TAKING SAMPLES WITH A VIEW TO PERFORMING COMPLEMENTARY ANALYSES

(30) Priorité: 27.02.2013 FR 1351741
(43) Date de publication de la demande: 06.01.2016
(73) Titulaire: AREVA NC, 92400 Courbevoie (FR)
(72) Inventeur: PICCO, Bernard, F-30330 Saint Andre d'Olerargues (FR); VARET, Thierry, F-30200 Bagnols-sur-Ceze (FR)
(74) Mandataire: Brevalex
(86) Numéro de dépôt international: PCT/EP2014/053507
(87) Numéro de publication internationale: WO 2014/131717

(56) Documents cités:
- EP-A1- 1 936 361
- WO-A1-93/07453
- WO-A1-95/17656
- WO-A1-2010/061069
- GB-A- 2 359 886
- US-A1- 2001 036 243
- US-A1- 2005 079 626
- US-A1- 2007 056 388

## Description

### DOMAINE TECHNIQUE

La présente invention concerne un système permettant d'analyser la composition de la couche superficielle d'un matériau par LIBS, c'est-à-dire par spectrométrie de plasma induit par laser (en anglais, *laser-induced breakdown spectroscopy*), et de procéder à un prélèvement des particules représentatives de cette couche superficielle aux fins d'analyses complémentaires qualitatives ou quantitatives ou de contrôles de cette couche superficielle.

Plus particulièrement, l'invention concerne un système permettant d'analyser la contamination surfacique d'un matériau par LIBS et de contrôler cette contamination.

Elle s'applique notamment à l'analyse et au contrôle de la contamination chimique surfacique d'un matériau, mais plus particulièrement à l'analyse et au contrôle de la contamination radiologique surfacique d'un matériau, aux fins notamment d'effectuer des investigations radiologiques dans des ateliers, des bâtiments, et plus généralement des installations nucléaires, en particulier pour réaliser une cartographie de leur état radiologique avant assainissement et/ou démantèlement ou après assainissement.

### ÉTAT DE LA TECHNIQUE ANTÉRIEURE

On se reportera aux documents suivants :
**[1]** WO 95/17656**, Method for determining the surface contamination of a solid, and device therefor, invention de P. Laffont et al.**
**[2]** US 5,583,634**, Process for elementary analysis by optical émission spectroscopy on plasma produced by laser in the présence of argon, invention de N. André et al.**
**[3]** US 7,106,439**, Elementary analysis device by optical émission spectrometry on laser produced plasma, invention de J.L. Lacour et al.**
**[4]** WO 2011/060404**, Techniques for removing a contaminant layer from a thermal barrier coating and estimating remaining life of the coating, invention de W.T. Hassan et al.**
**[5]** WO 2012/005775**, Laser-induced breakdown spectroscopy instrumentation for real-time elemental analysis, invention de J.E. Barefield.**

Le document [1] se rapporte au contrôle de la contamination surfacique d'un solide. Les documents [2] et [3] concernent l'analyse de matériaux par la technique LIBS. Le document [4] se rapporte à la décontamination d'un revêtement pollué par des contaminants chimiques et à l'analyse de ces contaminants, et utilise la technique LIBS à cet effet. Le document [5] concerne un dispositif portable, permettant la mise en oeuvre de la technique LIBS.

Le document GB2359886-A, "Laser spectroscopic remote detection of surface contamination", se rapporte à la détection par la technique LIBS, d'une contamination radioactive sur un récipient. Aucune des techniques divulguées par ces documents ne permet à la fois d'analyser la contamination surfacique d'un matériau et d'en effectuer un prélèvement en vue de contrôler cette contamination ou d'en réaliser une analyse complémentaire qualitative ou quantitative.

### EXPOSÉ DE L'INVENTION

La présente invention a pour but d'atteindre ce double objectif.

Elle propose un système permettant à la fois l'analyse de la composition de la couche superficielle d'un matériau et le prélèvement des particules représentatives de cette couche superficielle au moyen d'un unique laser pulsé, ainsi qu'un procédé d'analyse et de prélèvement mettant en oeuvre ce système.

Il s'agit donc de combiner deux techniques :
- la technique LIBS, qui permet d'analyser la nature chimique et la concentration relative (en %) des éléments qui sont présents à la surface du matériau, et
- une technique de prélèvement qui utilise le même laser pulsé que la technique LIBS et qui permet l'aspiration et la collecte des particules ablatées, en vue de la quantification précise des éléments constitutifs de l'échantillon prélevé ou en vue d'une analyse qualitative complémentaire.

On rappelle brièvement en quoi consiste la technique LIBS : une impulsion laser à la surface du matériau engendre un plasma qui se détend et se refroidit en émettant un rayonnement lumineux; ce dernier est collecté et transmis à un spectromètre ; les raies du spectre ainsi obtenu sont récupérées et analysées.

Pour ce qui concerne la technique de prélèvement, une impulsion laser est encore envoyée à la surface du matériau (au moyen du même laser pulsé). Il en résulte une ablation de particules de la surface du matériau. Les particules ablatées sont aspirées par des moyens de prélèvement puis recueillies sur un filtre.

Lorsqu'il s'agit de l'application particulière dans le domaine de l'analyse et du contrôle de contamination radiologique surfacique d'un matériau, la quantification de la contamination (exprimée en Bq/cm²) est réalisée par un moyen de comptage de la radioactivité collectée sur le filtre, cette quantification étant réalisée sur place ou dans le laboratoire où le filtre aura été envoyé.

De façon précise, la présente invention a pour objet un système pour l'analyse de la composition de la couche superficielle, notamment radioactive, d'un matériau, par spectrométrie de plasma induit par laser, comprenant :
- un unique laser pulsé, pour engendrer un faisceau laser pulsé, apte à interagir avec la couche superficielle et produire un plasma à la surface du matériau,
- un dispositif de focalisation du faisceau laser pulsé sur la surface du matériau,
- un dispositif pour collecter la lumière émise par le plasma, et
- un dispositif pour l'analyse spectrale de la lumière ainsi collectée et la détermination de la composition élémentaire de la couche superficielle à partir de l'analyse spectrale,
caractérisé en ce qu'il comprend en outre un dispositif pour aspirer et collecter des particules représentatives de cette couche superficielle, extraites de celle-ci sous l'effet du faisceau laser pulsé focalisé, en vue d'au moins une analyse complémentaire qualitative ou quantitative ou d'au moins un contrôle, notamment un contrôle de contamination radiologique, à partir des particules aspirées et collectées.

Selon un mode de réalisation préféré du système, objet de l'invention, le laser pulsé et le dispositif de focalisation sont choisis pour obtenir une densité de puissance comprise dans l'intervalle allant de 1 GW/cm² à 50 GW/cm², à la surface du matériau.

De préférence, le dispositif de focalisation est choisi pour obtenir un faisceau laser pulsé focalisé dont la taille (plus précisément le diamètre de focalisation pour un faisceau laser sensiblement circulaire) est comprise dans l'intervalle allant de 1 µm à 10 µm, à la surface du matériau.

Le dispositif pour aspirer et collecter les particules est choisi de préférence pour obtenir une vitesse d'aspiration comprise dans l'intervalle allant de 20 m/s à 200 m/s.

Selon un mode de réalisation préféré de l'invention, le dispositif de focalisation du faisceau laser pulsé comprend :
- une fibre optique ayant une première extrémité, connectée au laser pulsé, et une deuxième extrémité, et
- une lentille de focalisation disposée à la deuxième extrémité de la fibre optique.

Le dispositif pour collecter la lumière émise par le plasma peut comprendre une fibre optique dont une extrémité est de préférence pourvue d'une lentille de collection de lumière.

De préférence, le système est portable et le dispositif pour aspirer et collecter les particules comprend :
- un cyclone d'aspiration pour aspirer de l'air contenant les particules représentatives de cette couche superficielle,
- une pompe pour aspirer l'air, et
- un conduit qui relie la pompe au cyclone.

Ce dispositif peut alors comprendre :
- un filtre, par exemple en papier, sur lequel se déposent les particules contenues dans l'air aspiré, et
- un logement, éventuellement amovible, qui est prévu sur le conduit pour y disposer le filtre et l'en retirer en vue de l'analyse complémentaire qualitative ou quantitative ou du contrôle à partir des particules déposées sur le filtre.

De manière optionnelle, le système peut également comprendre un dispositif pour l'analyse complémentaire quantitative, ou pour l'analyse complémentaire qualitative (et donc autre que celle qui résulte de l'analyse spectrale) ou pour le contrôle, notamment le contrôle de contamination radiologique, à partir des particules déposées sur le filtre. Dans le cas du contrôle de contamination radiologique, ce contrôle direct permet une évaluation de ladite contamination, étant entendu que le contrôle précis, nécessitant des appareillages plus lourds, est alors réalisé en laboratoire de façon différée.

Selon un autre mode de réalisation particulier du système, objet de l'invention, le dispositif pour aspirer et collecter les particules comprend :
- une tête d'aspiration, pour aspirer de l'air contenant les particules extraites de la couche superficielle du matériau,
- une pompe pour aspirer l'air,
- un conduit qui relie la pompe à la tête d'aspiration,
- un logement qui est prévu sur le conduit,
- une grille disposée dans le logement, ce dernier comportant deux ouvertures au-dessus de la grille, respectivement au niveau des deux extrémités de celle-ci,
- un filtre, par exemple en papier, qui est déplaçable sur la grille, et apte à traverser les deux ouvertures du logement, et sur lequel se déposent des particules contenues dans l'air aspiré,
- un dispositif pour l'analyse complémentaire qualitative ou quantitative ou le contrôle, notamment le contrôle de la contamination radiologique, à partir des particules déposées sur le filtre, et
- un dispositif pour déplacer le filtre sur la grille et au niveau du dispositif pour l'analyse complémentaire qualitative ou quantitative ou le contrôle, notamment le contrôle de la contamination radiologique.

La présente invention a en outre pour objet un procédé pour l'analyse par LIBS de la composition de la couche superficielle d'un matériau, et pour le prélèvement d'échantillons en vue d'au moins une analyse complémentaire qualitative ou quantitative ou d'au moins un contrôle de cette couche superficielle, et plus particulièrement d'au moins un contrôle de la contamination radiologique, mettant en oeuvre le système, objet de l'invention.

Ce procédé comprend une première étape d'analyse par LIBS, une deuxième étape de prélèvement, ces première et deuxième étapes étant réalisées de manière simultanée ou séquentielle, et une troisième étape d'analyse complémentaire qualitative ou quantitative ou de contrôle.

Selon un premier mode de réalisation particulier de ce procédé, dans une première étape, on procède à l'analyse LIBS du matériau, puis si le résultat de l'analyse LIBS révèle la présence d'au moins un élément chimique d'intérêt, par exemple un contaminant radioactif, on procède dans une deuxième étape, à un prélèvement d'un échantillon de la couche superficielle du matériau libéré par l'impact du faisceau laser pour en réaliser l'analyse qualitative ou quantitative complémentaire ou le contrôle. Le procédé est, dans ce cas, mis en oeuvre de manière séquentielle. Ce premier mode de réalisation a pour avantage de garantir que la matière prélevée contient effectivement les éléments recherchés, et limite donc l'utilisation et le gaspillage de filtres. Il permet donc de générer moins de déchets et, dans le cas où cette analyse complémentaire ou le contrôle est effectué en laboratoire, de limiter le nombre d'analyses infructueuses, d'où un gain de temps et une économie des ressources du laboratoire.

Selon un deuxième mode de réalisation particulier, autrement dénommé mode parallèle, les deux étapes d'analyse par LIBS et de prélèvement sont réalisées de manière simultanée. Cela peut permettre, dans le cas d'un contrôle systématique et automatisé, de disposer simultanément des résultats de l'analyse LIBS et de l'analyse du filtre de prélèvement, qui peuvent alors être complémentaires.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue schématique d'un premier mode de réalisation particulier du système, objet de l'invention, dans lequel ce système est portable, et
- la figure 2 est une vue schématique d'un deuxième mode de réalisation particulier du système, objet de l'invention, dans lequel ce système est fixe.

### EXPOSÉ DÉTAILLÉ DE MODES DE RÉALISATION PARTICULIERS

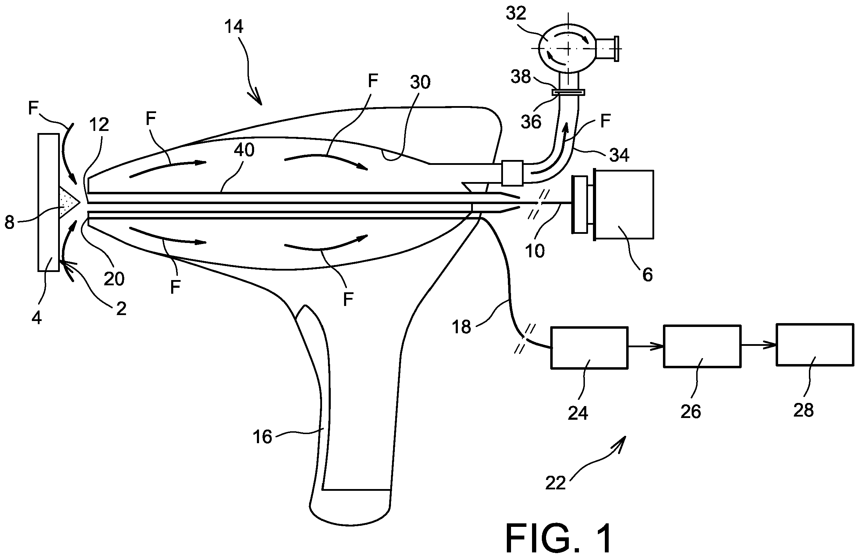

La figure 1 illustre schématiquement un premier exemple de l'invention, dans l'application au contrôle de contamination radiologique surfacique d'un matériau.

Il s'agit donc d'un système permettant non seulement l'analyse mais encore le contrôle de la contamination surfacique 2 d'un matériau 4. L'analyse utilise la technique LIBS. Dans l'exemple décrit, le système est portable. Et la contamination surfacique du matériau est de nature radiologique.

Le système d'analyse et de contrôle de contamination radiologique, représenté sur la figure 1, comprend :
- un unique laser pulsé 6, par exemple un laser YAG pulsé, pour engendrer un faisceau laser pulsé, apte à interagir avec la contamination surfacique 2 et produire un plasma 8 à la surface du matériau 4, et
- un dispositif de focalisation du faisceau laser pulsé sur la surface du matériau 4.

Ce dispositif comprend une fibre optique 10 dont une extrémité est optiquement couplée au laser 6. L'autre extrémité de la fibre 10 est pourvue d'une lentille de focalisation 12 pour focaliser le faisceau laser pulsé sur la surface du matériau 4.

Comme on le voit, le système de la figure 1 comprend un boîtier 14 pourvu d'une poignée de préhension 16. Et l'extrémité de la fibre 10, terminée par la lentille 12 est sensiblement rectiligne et logée dans le boîtier 14. La poignée de préhension 16 permet d'orienter le système vers le matériau étudié, pour focaliser le faisceau à la surface de celui-ci.

Le système de la figure 1 comprend aussi un dispositif pour collecter la lumière émise par le plasma 8. Ce dispositif comprend, dans l'exemple décrit, une fibre optique 18 dont une extrémité est de préférence pourvue d'une lentille de collection de lumière 20. Comme on le voit, la lentille 20 est au niveau de la lentille 12 mais sous celle-ci.

Le système comprend aussi un dispositif 22 pour l'analyse spectrale de la lumière ainsi collectée et la détermination de la composition élémentaire de la contamination surfacique à partir de l'analyse spectrale ainsi effectuée. Ce dispositif 22 comprend :
- un spectromètre 24, auquel est couplée l'autre extrémité de la fibre 18, et
- un dispositif 26 de traitement du spectre fourni par le spectromètre 24, pour déterminer la composition élémentaire de la contamination.

Ce dispositif 26 est pourvu d'un dispositif 28 pour afficher les résultats obtenus.

Conformément à l'invention, le système de la figure 1 comprend en outre un dispositif pour aspirer et collecter des particules de la contamination surfacique 2, extraites de celle-ci sous l'effet du faisceau laser pulsé focalisé, en vue de contrôler aussi la contamination surfacique à partir des particules aspirées et collectées.

Ce dispositif comprend :
- un cyclone d'aspiration 30 pour aspirer de l'air contenant les particules de la contamination surfacique 2,
- une pompe 32 pour aspirer l'air, et
- un conduit 34 qui relie la pompe 32 au cyclone 30.

L'air aspiré est symbolisé par les flèches F sur la figure 1.

Le dispositif pour aspirer et collecter les particules comprend en outre :
- un filtre 36, par exemple en papier, sur lequel se déposent des particules contenues dans l'air aspiré, et
- un logement 38 qui est prévu sur le conduit 34 pour y disposer le filtre 36 et l'en retirer en vue de contrôler la contamination surfacique 2 à partir des particules déposées sur le filtre 36.

Ce contrôle peut être effectué en laboratoire, auquel cas il faut alors transporter le filtre 36. Pour effectuer le contrôle, on utilise par exemple un compteur proportionnel, associé à des moyens électroniques de comptage.

Comme on le voit sur la figure 1, l'extrémité sensiblement rectiligne de la fibre optique 10 est à l'intérieur du cyclone d'aspiration 30 et elle est logée dans un tube 40 qui protège cette fibre pour éviter qu'elle soit perturbée par les mouvements de l'air dans le cyclone.

De plus, dans l'exemple décrit, le logement 38 est monté de façon inamovible sur le conduit 34. Mais, en variante, on peut prévoir un logement 38 amovible. Cela permet de transporter le filtre dans le logement vers le laboratoire pour réaliser des analyses complémentaires qualitatives ou quantitatives sur l'échantillon de particules collectées sur le filtre. A titre d'exemple de telles analyses complémentaires réalisées de manière déportée, on peut citer l'établissement du spectre isotopique. Par ailleurs, le laboratoire peut être, par exemple, dans un véhicule que l'on peut amener à proximité du matériau analysé et contrôlé.

Revenons sur les deux techniques utilisées : la technique LIBS et la technique de contrôle de contamination. Dans l'invention, en particulier, dans le système représenté sur la figure 1, on associe ces deux techniques. Cela pose des problèmes pour le choix de la densité de puissance D devant être déposée sur le matériau, le choix de la taille T du faisceau laser pulsé focalisé au niveau du matériau, c'est-à-dire le diamètre du spot laser sur le matériau puisque le spot laser est généralement sensiblement circulaire, et le choix de la vitesse d'aspiration V.

En effet, les paramètres D et T ont des valeurs différentes pour les deux techniques. Et, pour ce qui concerne le paramètre V, une valeur trop grande peut nuire à la qualité de l'analyse spectrométrique : on risque « d'aspirer » le plasma. On sait d'ailleurs que la mise en oeuvre de la technique LIBS est favorisée si l'on envoie un jet d'air ou de gaz, par exemple un gaz neutre, vers le plasma, ce qui peut nécessiter d'avoir à trouver un équilibre optimisé pour rendre efficace chacune des fonctions (1) d'injection de l'air ou du gaz et (2) d'aspiration.

Pour la mise en oeuvre de l'invention, en particulier du système de la figure 1, il convient donc de choisir, pour les paramètres D, T et V, des gammes de valeurs optimales, compatibles avec les deux techniques utilisées. Les gammes de valeurs choisies sont données ci-après.

Le laser pulsé 6 et la focalisation sont choisis pour obtenir une densité de puissance D comprise dans l'intervalle allant de 1 GW/cm² à 50 GW/cm², à la surface du matériau 4. A titre purement indicatif et nullement limitatif, D vaut environ 30 GW/cm².

En outre, la focalisation est choisie pour obtenir un faisceau laser pulsé focalisé dont la taille T est comprise dans l'intervalle allant de 1 µm à 10 µm, à la surface du matériau 4. A titre purement indicatif et nullement limitatif, on choisit une taille T égale à environ 5 µm.

Et le dispositif pour aspirer et collecter les particules (pompe-conduit-cyclone dans l'exemple de la figure 1) est choisi pour obtenir une vitesse d'aspiration V comprise dans l'intervalle allant de 20 m/s à 200 m/s, de préférence dans l'intervalle allant de 20 m/s à 150 m/s.

Le système que l'on a décrit en faisant référence à la figure 1 est de type portable, plus généralement transportable, jusqu'à l'endroit où se trouve le matériau contaminé.

Mais on peut concevoir un système fixe, conforme à l'invention, auquel cas, il faut amener le matériau contaminé jusqu'au système.

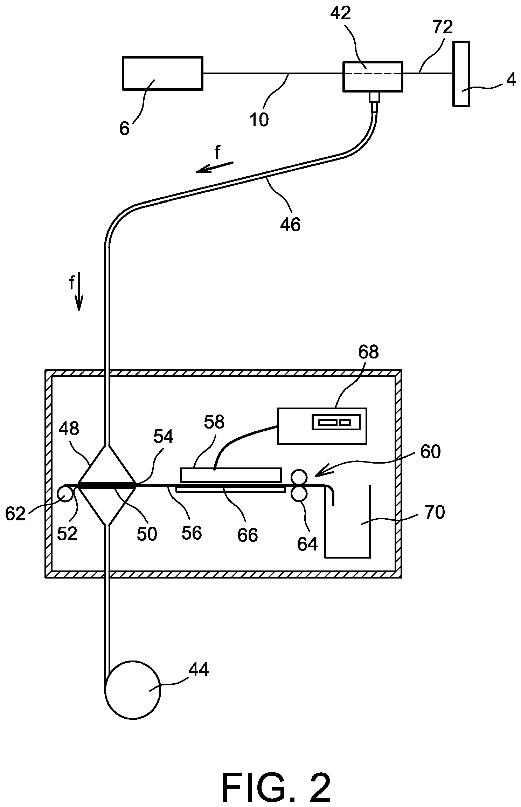

Un exemple d'un système fixe, conforme à l'invention, également lié à l'application au contrôle de contamination radiologique surfacique d'un matériau, est schématiquement illustré par la figure 2.

Dans le cas de ce système, le dispositif pour aspirer et collecter les particules comprend :
- une tête d'aspiration 42, pour aspirer de l'air contenant les particules de la contamination surfacique,
- une pompe 44 pour aspirer l'air,
- un conduit 46 qui relie la pompe 44 à la tête d'aspiration 42,
- un logement 48 qui est prévu sur le conduit 46,
- une grille 50 disposée dans le logement 48, ce dernier comportant deux ouvertures 52 et 54 au-dessus de la grille 50, respectivement au niveau des deux extrémités de celle-ci,
- un filtre 56, par exemple en papier, qui est déplaçable sur la grille 50, et apte à traverser les deux ouvertures 52 et 54 du logement 48, et sur lequel se déposent des particules contenues dans l'air aspiré,
- un dispositif 58 pour contrôler la contamination à partir des particules déposées sur le filtre 56, et
- un dispositif 60 pour déplacer le filtre 56 sur la grille 50 et au niveau du dispositif 58 pour contrôler la contamination.

Les flèches f montrent le mouvement de l'air aspiré.

Dans l'exemple de la figure 2, le filtre 56 est sous la forme d'une bande de papier-filtre que l'on déroule à partir d'une bobine 62. Cette bande est mise en mouvement grâce à des rouleaux d'entraînement 64 commandés par un moteur non représenté.

La bande passe successivement au-dessus de la grille 50 qui lui sert de support puis au niveau du dispositif de contrôle 58. On voit que la bande passe sur une plaque 66 lui servant de support et que le dispositif 58 est au-dessus de cette plaque 66.

Dans l'exemple de la figure 2, ce dispositif 58 est un compteur proportionnel. Il est associé à des moyens électroniques de comptage 68.

On voit aussi un dispositif 70 pour récupérer le papier-filtre après son passage au niveau du compteur proportionnel.

Sur la figure 2, on voit encore l'unique laser pulsé utilisé 6, par exemple de type YAG, le matériau étudié 4 qui reçoit un faisceau laser pulsé focalisé 72, la fibre optique 10 qui guide le faisceau jusqu'au voisinage du matériau 4, en traversant la tête d'aspiration 42 dans laquelle elle est encore protégée par des moyens non représentés. L'optique de focalisation du faisceau laser n'est pas représentée.

Sur la figure 2, les divers moyens de récupération et d'analyse de la lumière issue du plasma engendré ne sont pas représentés. Mais l'homme du métier peut aisément adapter les moyens correspondants, relatifs à la figure 1, à cette figure 2.

Dans le cas de cette figure 2, on note que l'analyse de la contamination s'effectue en temps réel, alors qu'elle s'effectue en temps différé dans le cas de la figure 1.

On donne ci-après des exemples du procédé, objet de l'invention :
- Exemple de procédé mis en oeuvre en mode séquentiel :
   ∘ Contrôle de contamination en fin d'assainissement : le système d'analyse LIBS est utilisé en mode balayage pour caractériser de la façon la plus exhaustive possible la surface assainie, et s'assurer de l'absence d'éléments chimiques caractéristiques, par exemple l'uranium ; en cas de détection d'un signal significatif, on passe en mode prélèvement ; ce prélèvement est ensuite envoyé au laboratoire pour quantification précise de la contamination présente (uranium et autres radioéléments le cas échéant).
   ∘ Prélèvement pour évaluation du spectre type : la partie LIBS du système d'analyse est utilisée en mode balayage pour rechercher, sur les surfaces de l'équipement ou de la structure, une zone où un élément caractéristique, par exemple l'uranium, est présent de manière non négligeable (à partir de plusieurs Bq.cm⁻²) ; une bonne calibration de l'appareil LIBS peut permettre de remonter à la quantité d'uranium présente en cette zone, mais cette information n'est pas suffisante pour la préparation des interventions en milieu radioactif : il est important de connaître la répartition en les différents isotopes de l'uranium ; dans ce cas, une fois une zone d'intérêt identifiée dans l'étape d'analyse LIBS, une prise d'échantillon est effectuée par le système de prélèvement, l'échantillon ainsi prélevé étant envoyé au laboratoire pour une analyse par un spectromètre de masse. L'analyse LIBS préalablement effectuée permet de garantir que l'échantillon prélevé contiendra suffisamment de matière pour réaliser cette analyse complémentaire.
- Exemple de procédé mis en oeuvre en mode parallèle :
   ∘ Contrôle de qualité systématique : la qualité de revêtement d'une pièce, l'absence d'impuretés, peuvent être requises et devoir être démontrées par un contrôle systématique ; la pièce est alors positionnée devant le système ; de façon systématique une analyse LIBS est effectuée ainsi que, simultanément, une prise d'échantillon ; le résultat de l'analyse LIBS sert à effectuer un premier tri immédiat, alors que l'analyse complémentaire ou le contrôle sur la matière prélevée sert à confirmer, éventuellement par échantillonnage, l'analyse effectuée par LIBS.

L'invention peut s'appliquer au cas d'une contamination radiologique (contrôle de non contamination ou qualification et quantification d'une activité radiologique surfacique sur un équipement ou une structure) ou au cas d'une contamination chimique (recherche de la présence d'impuretés à la surface d'un matériau).

## Revendications

1. Système pour l'analyse de la composition de la couche superficielle, notamment radioactive, d'un matériau, par spectrométrie de plasma induit par laser, comprenant :
- un unique laser pulsé (6), pour engendrer un faisceau laser pulsé, apte à interagir avec la couche superficielle et produire un plasma à la surface du matériau (4),
- un dispositif (10, 12) de focalisation du faisceau laser pulsé sur la surface du matériau,
- un dispositif (18, 20) pour collecter la lumière émise par le plasma, et
- un dispositif (22) pour l'analyse spectrale de la lumière ainsi collectée et la détermination de la composition élémentaire de la couche superficielle à partir de l'analyse spectrale,
**caractérisé en ce qu'**il comprend en outre un dispositif (30, 32, 34 ; 42, 44, 46) pour aspirer et collecter des particules représentatives de cette couche superficielle, extraites de celle-ci sous l'effet du faisceau laser pulsé focalisé, en vue d'au moins une analyse complémentaire qualitative ou quantitative ou d'au moins un contrôle, notamment un contrôle de contamination radiologique, à partir des particules aspirées et collectées.

2. Système selon la revendication 1, dans lequel le laser pulsé (6) et le dispositif de focalisation (10, 12) sont choisis pour obtenir une densité de puissance comprise dans l'intervalle allant de 1 GW/cm² à 50 GW/cm², à la surface du matériau (4).

3. Système selon l'une quelconque des revendications 1 et 2, dans lequel le dispositif de focalisation (10, 12) est choisi pour obtenir un faisceau laser pulsé focalisé dont la taille est comprise dans l'intervalle allant de 1 µm à 10 µm, à la surface du matériau (4).

4. Système selon l'une quelconque des revendications 1 à 3, dans lequel le dispositif (30, 32, 34 ; 42, 44, 46) pour aspirer et collecter les particules est choisi pour obtenir une vitesse d'aspiration comprise dans l'intervalle allant de 20 m/s à 200 m/s.

5. Système selon l'une quelconque des revendications 1 à 4, dans lequel le dispositif de focalisation du faisceau laser pulsé comprend :
- une fibre optique (10) ayant une première extrémité connectée au laser pulsé (6), et une deuxième extrémité, et
- une lentille de focalisation (12) disposée à la deuxième extrémité de la fibre optique (10).

6. Système selon l'une quelconque des revendications 1 à 5, dans lequel le dispositif pour collecter la lumière émise par le plasma comprend une fibre optique (18) dont une extrémité est de préférence pourvue d'une lentille (20) de collection de lumière.

7. Système selon l'une quelconque des revendications 1 à 6, **caractérisé en ce qu'**il est portable et dans lequel le dispositif pour aspirer et collecter les particules comprend :
- un cyclone d'aspiration (30) pour aspirer de l'air contenant les particules représentatives de cette couche superficielle,
- une pompe (32) pour aspirer l'air, et
- un conduit (34) qui relie la pompe au cyclone.

8. Système selon la revendication 7, dans lequel le dispositif pour aspirer et collecter les particules comprend en outre :
- un filtre (36), par exemple en papier, sur lequel se déposent des particules contenues dans l'air aspiré, et
- un logement (38), éventuellement amovible, qui est prévu sur le conduit (34) pour y disposer le filtre et l'en retirer en vue de l'analyse complémentaire qualitative ou quantitative ou du contrôle à partir des particules déposées sur le filtre.

9. Système selon la revendication 8, comprenant en outre un dispositif pour l'analyse complémentaire qualitative ou quantitative ou pour le contrôle, notamment le contrôle de contamination radiologique, à partir des particules déposées sur le filtre

10. Système selon l'une quelconque des revendications 1 à 6, dans lequel le dispositif pour aspirer et collecter les particules comprend :
- une tête d'aspiration (42), pour aspirer de l'air contenant les particules extraites de la couche superficielle du matériau,
- une pompe (44) pour aspirer l'air,
- un conduit (46) qui relie la pompe à la tête d'aspiration,
- un logement (48) qui est prévu sur le conduit,
- une grille (50) disposée dans le logement, ce dernier comportant deux ouvertures (52, 54) au-dessus de la grille, respectivement au niveau des deux extrémités de celle-ci,
- un filtre (56), par exemple en papier, qui est déplaçable sur la grille, et apte à traverser les deux ouvertures du logement, et sur lequel se déposent des particules contenues dans l'air aspiré,
- un dispositif (58) pour l'analyse complémentaire qualitative ou quantitative ou le contrôle, notamment le contrôle de la contamination radiologique, à partir des particules déposées sur le filtre, et
- un dispositif (60) pour déplacer le filtre sur la grille et au niveau du dispositif (58) pour l'analyse complémentaire qualitative ou quantitative ou le contrôle, notamment le contrôle de la contamination radiologique.

11. Procédé pour l'analyse par spectrométrie de plasma induit par laser, de la composition de la couche superficielle d'un matériau, et pour le prélèvement d'échantillons en vue d'au moins une analyse complémentaire qualitative ou quantitative ou d'au moins un contrôle de cette couche superficielle, procédé mettant en oeuvre le système selon l'une quelconque des revendications 1 à 10, **caractérisé en ce qu'**il comprend une première étape d'analyse par spectrométrie de plasma induit par laser, une deuxième étape de prélèvement, ces première et deuxième étapes étant réalisées de manière simultanée ou séquentielle, et une troisième étape d'analyse complémentaire qualitative ou quantitative ou de contrôle.

## Patentansprüche

1. System zur Analyse der Zusammensetzung der insbesondere radioaktiven Oberflächenschicht eines Materials durch laserinduzierte Plasmaspektrometrie, umfassend:
- einen einzelnen gepulsten Laser (6) zum Erzeugen eines gepulsten Laserstrahls, der dazu ausgelegt ist, mit der Oberflächenschicht zu wechselwirken und ein Plasma an der Oberfläche des Materials (4) zu produzieren,
- eine Vorrichtung (10, 12) zur Fokussierung des gepulsten Laserstrahls auf die Oberfläche des Materials,
- eine Vorrichtung (18, 20) zum Sammeln des durch das Plasma emittierten Lichts, und
- eine Vorrichtung (22) für die Spektralanalyse des derart gesammelten Lichts und die Bestimmung der Elementenzusammensetzung der Oberflächenschicht ausgehend von der Spektralanalyse,
**dadurch gekennzeichnet, dass** es ferner eine Vorrichtung (30, 32, 34; 42, 44, 46) zum Ansaugen und Sammeln von Partikeln umfasst, die für diese Oberflächenschicht repräsentativ und von dieser unter der Einwirkung des fokussierten gepulsten Laserstrahls extrahiert sind, zum Zweck wenigstens einer komplementären qualitativen oder quantitativen Analyse oder wenigstes einer Kontrolle, insbesondere einer radiologischen Kontaminationskontrolle, auf Grundlage der angesaugten und gesammelten Partikel.

2. System nach Anspruch 1, bei dem der gepulste Laser (6) und die Fokussiervorrichtung (10, 12) derart gewählt sind, dass an der Oberfläche des Materials (4) eine Leistungsdichte erhalten wird, die in dem Intervall 1 GW/cm² bis 50 GW/cm² enthalten ist.

3. System nach einem der Ansprüche 1 und 2, bei dem die Fokussiervorrichtung (10, 12) derart gewählt ist, dass ein fokussierter gepulster Laserstrahl erhalten wird, dessen Größe an der Oberfläche des Materials (4) in dem Intervall von 1µm bis 10µm enthalten ist.

4. System nach einem der Ansprüche 1 bis 3, bei dem die Vorrichtung (30, 32, 34; 42, 44, 46) zum Ansaugen und Sammeln der Partikel derart gewählt ist, dass eine Ansauggeschwindigkeit erhalten wird, die in dem Intervall von 20 m/s bis 200 m/s enthalten ist.

5. System nach einem der Ansprüche 1 bis 4, bei dem die Fokussiervorrichtung für den gepulsten Laserstrahl umfasst:
- eine optische Faser (10) mit einem ersten Ende, das an den gepulsten Laser (6) angeschlossen ist, und mit einem zweiten Ende, und
- eine Fokussierlinse (12), die an dem zweiten Ende der optischen Faser (10) angeordnet ist.

6. System nach einem der Ansprüche 1 bis 5, bei dem die Vorrichtung zum Sammeln des durch das Plasma emittierten Lichts eine optische Faser (18) umfasst, deren eines Ende vorzugsweise mit einer Linse (20) zum Sammeln von Licht versehen ist.

7. System nach einem der Ansprüche 1 bis 6, **dadurch gekennzeichnet, dass** es tragbar ist, und bei dem die Vorrichtung zum Ansaugen und Sammeln der Partikel umfasst:
- einen Ansaugzyklon (30) zum Ansaugen der Luft, die die Partikel enthält, welche für diese Oberflächenschicht repräsentativ sind,
- eine Pumpe (32) zum Ansaugen der Luft, und
- eine Leitung (34), die die Pumpe mit dem Zyklon verbindet.

8. System nach Anspruch 7, bei dem die Vorrichtung zum Ansaugen und Sammeln der Partikel ferner umfasst:
- einen Filter (36), beispielsweise aus Papier, auf dem sich die in der angesaugten Luft enthaltenen Partikel ablagern, und
- eine Aufnahme (38), gegebenenfalls abnehmbar, die an der Leitung (34) vorgesehen ist, um dort den Filter anzuordnen und ihn von dort zu entnehmen zum Zweck der komplementären qualitativen oder quantitativen Analyse oder der Kontrolle ausgehend von den auf dem Filter abgelagerten Partikeln.

9. System nach Anspruch 8, ferner umfassend eine Vorrichtung für die komplementäre qualitative oder quantitative Analyse oder für die Kontrolle, insbesondere die radiologische Kontaminationskontrolle, ausgehend von den auf dem Filter abgelagerten Partikeln.

10. System nach einem der Ansprüche 1 bis 6, bei dem die Vorrichtung zum Ansaugen und Sammeln der Partikel umfasst:
- einen Ansaugkopf (42) zum Ansaugen der Luft, die die Partikel enthält, welche von der Oberflächenschicht des Materials extrahiert sind,
- eine Pumpe (44) zum Ansaugen der Luft,
- eine Leitung (46), die die Pumpe mit dem Ansaugkopf verbindet,
- eine Aufnahme (48), die an der Leitung vorgesehen ist,
- ein Gitter (50), das in der Aufnahme angeordnet ist, wobei letztere zwei Öffnungen (52, 54) über dem Gitter jeweils im Bereich seiner zwei Enden umfasst,
- einen Filter (56), beispielsweise aus Papier, der auf dem Gitter verlagerbar ist, und dazu ausgelegt ist, die zwei Öffnungen der Aufnahme zu durchsetzen, und auf dem sich Partikel ablagern, die in der angesaugten Luft enthalten sind,
- eine Vorrichtung (58) für die komplementäre qualitative oder quantitative Analyse oder die Kontrolle, insbesondere die radiologische Kontaminationskontrolle, ausgehend von den auf dem Filter abgelagerten Partikeln, und
- eine Vorrichtung (60) zur Verlagerung des Filters auf dem Gitter und im Bereich der Vorrichtung (58) für die komplementäre qualitative oder quantitative Analyse oder die Kontrolle, insbesondere die radiologische Kontaminationskontrolle.

11. Verfahren zur Analyse der Zusammensetzung der Oberflächenschicht eines Materials durch laserinduzierte Plasmaspektrometrie und zur Entnahme von Proben zum Zweck wenigstens einer komplementären qualitativen oder quantitativen Analyse oder wenigstens einer Kontrolle dieser Oberflächenschicht, welches Verfahren das System nach einem der Ansprüche 1 bis 10 verwendet, **dadurch gekennzeichnet, dass** es einen ersten Schritt der Analyse durch laserinduzierte Plasmaspektrometrie umfasst, einen zweiten Schritt der Entnahme, wobei dieser erste und zweite Schritt gleichzeitig oder nacheinander durchgeführt werden, sowie einen dritten Schritt der komplementären qualitativen oder quantitativen Analyse oder Kontrolle.

## Claims

1. A system for analysis of the composition of the surface layer, notably a radioactive layer, of a material, by laser-induced breakdown spectroscopy, including:
- a single pulsed laser (6), to generate a pulsed laser beam, able to interact with the surface layer and produce a plasma on the surface of the material (4),
- a device (10, 12) for focusing the pulsed laser beam on to the surface of the material,
- a device (18, 20) to collect the light emitted by the plasma, and
- a device (22) for spectral analysis of the light collected in this manner, and determination of the elemental composition of the surface layer from the spectral analysis,
**characterised in that** it also includes a device (30, 32, 34; 42, 44, 46) to suck up and collect representative particles of this surface layer, extracted from the latter under the effect of the focused pulsed laser beam, with a view to at least one additional qualitative or quantitative analysis, or at least one examination, notably a radiological contamination examination, using the sucked up, collected particles.

2. A system according to claim 1, in which the pulsed laser (6) and the focusing device (10, 12) are chosen to obtain a power density within the range 1 GW/cm² to 50 GW/cm², at the surface of the material (4).

3. A system according to either of claims 1 and 2, in which the focusing device (10, 12) is chosen to obtain a focused pulsed laser beam the size of which is within the range 1 µm to 10 µm, at the surface of the material (4).

4. A system according to any one of claims 1 to 3, in which the device (30, 32, 34; 42, 44, 46) to suck up and collect the particles is chosen to obtain a suction speed within the range 20 m/s to 200 m/s.

5. A system according to any one of claims 1 to 4, in which the focusing device of the pulsed laser beam includes:
- an optical fibre (10) having a first end connected to the pulsed laser (6), and a second end, and
- a focusing lens (12) positioned at the second end of the optical fibre (10).

6. A system according to any one of claims 1 to 5, in which the device to collect the light emitted by the plasma includes an optical fibre (18) one end of which is preferably fitted with a lens (20) for collecting light.

7. A system according to any one of claims 1 to 6, **characterised in that** it is portable, and in which the device to suck up and collect the particles includes:
- a suction cyclone (30) to draw in air containing the representative particles of this surface layer,
- a pump (32) to draw in the air, and
- a duct (34) which connects the pump to the cyclone.

8. A system according to claim 7, in which the device to suck up and collect the particles also includes:
- a filter (36), for example a paper filter, on which particles contained in the suction air are deposited, and
- a housing (38), which may possibly be detachable, which is installed on the duct (34) for the purpose of placing the filter in it and removing said filter from it with a view to the additional qualitative or quantitative analysis or the examination using the particles deposited on the filter.

9. A system according to claim 8, also including a device for additional qualitative or quantitative analysis or for examination, notably radiological contamination examination, using the particles deposited on the filter.

10. A system according to any one of claims 1 to 6, in which the device for sucking up and collecting the particles includes:
- a suction head (42) to draw in air containing the particles extracted from the surface layer of the material,
- a pump (44) to draw in the air,
- a duct (46) which connects the pump to the suction head,
- a housing (48) which is installed on the duct,
- a grid (50) positioned in the housing, where the latter has two apertures (52, 54) above the grid, respectively at both ends of this grid,
- a filter (56), for example a paper filter, which can be moved over the grid, and which is able to traverse both apertures of the housing, and on which particles contained in the suction air are deposited,
- a device (58) for additional qualitative or quantitative analysis or examination, notably radiological contamination examination, using the particles deposited on the filter, and
- a device (60) to move the filter over the grid and at the level of the device (58) for the additional qualitative or quantitative analysis or the examination, notably radiological contamination examination.

11. A method for analysis by laser-induced breakdown spectroscopy of the composition of the surface layer of a material, and for the taking of samples with a view to at least one additional qualitative or quantitative analysis or at least one examination of this surface layer, which method implements the system according to any one of claims 1 to 10, **characterised in that** it includes a first step of analysis by laser-induced breakdown spectroscopy, a second step of sampling, where these first and second steps are accomplished simultaneously or sequentially, and a third step of additional qualitative or quantitative analysis or of examination.
